# EUROPEAN PATENT SPECIFICATION

(11) **EP 4 290 632 B1**
(45) Date of publication and mention of the grant of the patent: **16.10.2024**
(21) Application number: 23167346.8
(22) Date of filing: 11.04.2023
(51) Int. Cl.: H01M 10/04, H01M 50/103, H01M 50/15, H01M 50/167

(54) **ASSEMBLY DEVICE FOR BATTERY CELL**
MONTAGEVORRICHTUNG FÜR BATTERIEZELLE
DISPOSITIF D'ASSEMBLAGE POUR ÉLÉMENT DE BATTERIE

(30) Priority: 09.06.2022 CN 202221421585 U
(43) Date of publication of application: 13.12.2023
(73) Proprietor: Contemporary Amperex Technology (Hong Kong) Limited, Central, Central And Western District (HK)
(72) Inventor: CHEN, Jianyun, Ningde City, Fujian, 352100 (CN)
(74) Representative: Laufhütte, Dieter

(56) References cited:
- EP-A1- 4 089 800
- CN-U- 207 104 261
- CN-U- 212 277 260
- US-A1- 2009 151 863
- US-A1- 2021 280 894

## Description

### Technical Field

The present application relates to the technical field of battery manufacturing, and in particular to an assembly device for a battery cell.

### Background Art

At present, batteries most used in vehicles are generally lithium ion batteries. As a rechargeable battery, the lithium ion battery has the advantages of small size, high energy density, high power density, many cycles of use, long storage time, etc.

A battery cell generally comprises a housing, an end cap, and an electrode assembly. By means of an assembly device, the electrode assembly is accommodated in the housing, and the end cap closes off an opening of the housing. The assembly device for assembling the battery cell has an important impact on the quality of the assembled battery cell. Therefore, how to improve the assembly device for the battery cell to make the assembled battery cell have good quality has become an urgent problem to be solved in the technical field of batteries.
CN 212 277 260 U relates to a device for loading a battery into a shell. CN 207 104 261 U relates to a top cap piece casing pressure equipment shaping device.

### Summary

The invention is defined in the appended claims. An embodiment of the present application provides an assembly system comprising a battery cell and an assembly device for the battery cell, to improve the quality of assembly of the battery cell.

An embodiment of the present application provides an assembly system comprising a battery cell and an assembly device for the battery cell, the battery cell comprising an end cap and a housing with an opening, with the opening of the housing being downward, and the assembly device for a battery cell comprising a supporting member and a pressing-down mechanism, wherein the supporting member is configured to support the end cap; and the pressing-down mechanism is arranged above the supporting member, and the pressing-down mechanism is configured to press down a wall of the housing opposite the opening to enable the housing to fit with the end cap, so that the end cap closes off the opening.

In the above technical solution, the supporting member is configured to support the end cap, so that an open end of the housing covers over the end cap, and the pressing-down mechanism above the supporting member presses down a wall of the housing opposite the opening to enable the open end of the housing to fit with the end cap, and thus the end cap closes off the opening of the housing. Therefore, during assembly of the end cap and the housing, the opening of the housing is downward, so that dust does not easily fall into the housing, thus ensuring the cleanliness of a battery interior and improving the quality of the battery cell. In addition, the supporting member supports the end cap, so that the structure of the assembly device for a battery cell can be simplified, and the equipment cost can be reduced.

According to the present application, the supporting member comprises: a supporting face and a recessed portion, wherein the supporting face is configured to support the end cap; and the recessed portion is recessed from the supporting face in a direction away from the pressing-down mechanism, and the recessed portion is configured to avoid an electrode terminal on the end cap.

In the above technical solution, the recessed portion on the supporting face can avoid the electrode terminal, so as to prevent the instability in supporting the end cap caused by interference between the electrode terminal and the supporting member. In addition, the electrode terminal is in inserted fit with the recessed portion, so that the position of the end cap can be secured, and the stability in supporting the end cap by the supporting member is further improved.

In some embodiments of the present application, the assembly device for a battery cell further comprises: a first limiting mechanism configured to limit the end cap in a first direction, the first direction being perpendicular to a pressing down direction of the pressing-down mechanism.

In the above technical solution, the first limiting mechanism limits the end cap in the first direction, and the end cap will not move relative to the supporting member in the first direction during the process of pressing down the housing by the pressing-down mechanism, which is conducive to improving the stability of the end cap on the supporting member and the assembly precision of the battery cell.

In some embodiments of the present application, the first limiting mechanism comprises two first limiting members, and a first limiting gap for accommodating the end cap is formed between the two first limiting members in the first direction.

In the above technical solution, the end cap is accommodated in the first limiting gap defined by the two first limiting members, and the end cap will not move relative to the supporting member in the first direction during the process of pressing down the housing by the pressing-down mechanism, thereby improving the support stability of the supporting member and the assembly precision of the battery cell.

In some embodiments of the present application, the supporting member at least partially extends into the first limiting gap to support the end cap.

In the above technical solution, the supporting member at least partially extends into the first limiting gap, so that the end cap can be more stably supported, and the first limiting member has a relatively large size in a vertical direction, which facilitates machining and manufacturing.

In some embodiments of the present application, the assembly device for a battery cell further comprises: a second limiting mechanism configured to limit the housing in the first direction, wherein the second limiting mechanism comprises two second limiting members, the two second limiting members are respectively arranged on the two first limiting members, and a second limiting gap for accommodating the housing is formed between the two second limiting members in the first direction.

In the above technical solution, the second limiting mechanism limits the housing in the first direction, and the housing will not move relative to the end cap in the first direction during the process of pressing down the housing by the pressing-down mechanism, which is conducive to keeping a stable relative position relationship between the housing and the end cap and improving the assembly precision of the battery cell. The two second limiting members are respectively arranged on the two first limiting members, so that the assembly device for a battery cell has a more compact structure, and a space occupied by the assembly device for a battery cell can be reduced.

In some embodiments of the present application, a first groove is formed in a surface of each of the first limiting members that faces the housing in the first direction, and the second limiting members are arranged in the first grooves.

In the above technical solution, each of the second limiting members is arranged in the first groove in the surface of the first limiting member that faces the end cap, so that the first limiting member and the second limiting member are more compact, and a space occupied by the first limiting member and the second limiting member is reduced.

In some embodiments of the present application, each of the first grooves passes through a surface of the first limiting member in a direction in which the supporting member faces the pressing-down mechanism.

In the above technical solution, each of the first grooves passes through the surface of the supporting member that faces the pressing-down mechanism, which facilitates the engagement of the second limiting member into the first groove from top to bottom.

In some embodiments of the present application, the second limiting members are made of a nonmetallic material.

In the above technical solution, the second limiting members are made of a nonmetallic material, which can reduce a risk of damage to the housing caused by the second limiting members when the second limiting members come into contact with the housing.

In some embodiments of the present application, the assembly device for a battery cell further comprises: a second limiting mechanism configured to limit the housing in the first direction.

In the above technical solution, the second limiting mechanism limits the housing in the first direction, and the housing will not move relative to the end cap in the first direction during the process of pressing down the housing by the pressing-down mechanism, which is conducive to keeping a stable relative position relationship between the housing and the end cap and improving the assembly precision of the battery cell.

In some embodiments of the present application, the assembly device for a battery cell further comprises: a third limiting mechanism configured to limit the housing in a second direction, the second direction being perpendicular to the pressing down direction of the pressing-down mechanism.

In the above technical solution, the third limiting mechanism limits the housing in the second direction, and the housing will not move relative to the end cap in the second direction during the process of pressing down the housing by the pressing-down mechanism, which is conducive to keeping a stable relative position relationship between the housing and the end cap and improving the assembly precision of the battery cell.

In some embodiments of the present application, the third limiting mechanism comprises two third limiting members spaced apart in the second direction; and each of surfaces of the two third limiting members that face the housing is provided with a second groove, and the second groove is configured for the housing to be engaged therein.

In the above technical solution, the housing is engaged into the second grooves of the two third limiting members, so that a stable fitting relationship between the housing and the third limiting members can be kept, and the stability of the housing is improved.

### Brief Description of the Drawings

In order to more clearly describe the technical solutions of the embodiments of the present application, the accompanying drawings required in the embodiments will be described briefly below. It should be understood that the following accompanying drawings illustrate only some embodiments of the present application and therefore should not be construed as a limitation on the scope thereof. For those of ordinary skill in the art, other relevant accompanying drawings can also be obtained from these accompanying drawings without any creative effort.
FIG. 1 is an isometric view of an assembly device for a battery cell according to some embodiments of the present application;
FIG. 2 is a cross-sectional view of the assembly device for a battery cell according to some embodiments of the present application;
FIG. 3 is an exploded view of a battery cell according to some embodiments of the present application;
FIG. 4 is a cross-sectional view of an assembly device for a battery cell according to some other embodiments of the present application; and
FIG. 5 is a schematic structural diagram of an assembly device for a battery cell according to some still other embodiments of the present application.

List of reference signs: 100: Assembly device for a battery cell; 10: Supporting member; 11: Supporting face; 12: Recessed portion; 13: First guide bevel; 14: Mounting portion; 141: First connecting section; 142: Second connecting section; 15: Supporting portion; 20: Pressing-down mechanism; 21: Electric motor; 22: Screw rod; 23: Pressing-down block; 30: Frame; 31: First support rod; 32: First platform; 321: Mounting hole; 322: Guide hole; 33: Second support rod; 34: Second platform; 35: First placing space; 36: Second placing space; 40: Guide assembly; 41: Mounting plate; 42: Guide rod; 50: First limiting mechanism; 51: First limiting member; 511: First limiting portion; 512: First groove; 52: First limiting gap; 60: Second limiting mechanism; 61: Second limiting member; 611: Second limiting portion; 612: Second guide bevel; 62: Second limiting gap; 70: Third limiting mechanism; 71: Third limiting member; 711: Second groove; 200: Battery cell; 210: End cap; 211: First surface; 212: Second surface; 220: Housing; 221: Opening; 230: Electrode terminal; 240: Electrode assembly; X: Vertical direction; Y: First direction; Z: Second direction.

### Detailed Description of Embodiments

In order to make the objectives, technical solutions and advantages of embodiments of the present application clearer, the technical solutions in the embodiments of the present application will be described clearly and completely below with reference to the accompanying drawings in the embodiments of the present application. Obviously, the embodiments described are some of, rather than all of, the embodiments of the present application. Generally, the assemblies of the embodiments of the present application described and illustrated in the accompanying drawings herein may be arranged and designed in a variety of different configurations.

It should be noted that the embodiments in the present application and features in the embodiments may be combined with each other without conflicts.

It should be noted that like numerals and letters refer to like items in the following accompanying drawings, so once an item is defined in one accompanying drawing, it does not require further definition and explanation in subsequent accompanying drawings.

In the description of the embodiments of the present application, it should be noted that the indicated orientations or positional relationships are based on the orientations or positional relationships shown in the accompanying drawings or are orientations or positional relationships in which a product of the present application is conventionally placed when in use, or the orientations or positional relationships commonly understood by those skilled in the art, and are intended to facilitate the description of the present application and simplify the description only, rather than indicating or implying that the device or element referred to must have a particular orientation or be constructed and operated in a particular orientation, and will not be interpreted as limiting the present application. In addition, the terms "first", "second", "third", etc. are merely used for distinct description, and shall not be construed as indicating or implying relative importance.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

A battery cell comprises a housing, an end cap, and an electrode assembly. The electrode assembly is accommodated in the housing. The housing is provided with an opening, and the end cap is configured to close off the opening, so that the end cap and the housing together form an accommodating space for accommodating the electrode assembly.

The inventors have found that an assembly device for a battery cell comprises a jacking mechanism, a correcting mechanism, and a pressing-down mechanism. An unassembled battery cell is placed on the jacking mechanism, the opening of the housing is upward, and the end cap is placed at an open end of the housing. The jacking mechanism jacks the unassembled battery cell up to the correcting mechanism, and the correcting mechanism adjusts a position of the end cap relative to the housing in a plurality of different directions. The pressing-down mechanism is configured to press down the end cap after the correcting mechanism adjusts the position of the end cap, so that the end cap fits with the housing and closes off the opening of the housing.

However, the existing correcting mechanism has a complicated structure and the assembly device for a battery cell has a high equipment cost. The jacking mechanism needs to drive the unassembled battery cell to move up, which leads to an insufficient production rhythm. The opening of the housing is upward, and dust in the environment and particles generated by friction between the end cap and the housing during the process of pressing down the end cap fall into the housing, thereby polluting an internal environment of the housing, and affecting the quality of the assembled battery cell.

In view of the above problems, in order to improve the quality of the assembled battery cell and simplify the structure of the assembly device for a battery cell, the inventors have designed an assembly device for a battery cell through in-depth research, which comprises a supporting member for supporting an end cap and a pressing-down mechanism arranged above the supporting member, wherein the pressing-down mechanism is configured to press down an housing to enable the housing to fit with the end cap, so that the end cap closes off an opening of the housing.

The supporting member is configured to support the end cap, so that an open end of the housing covers over the end cap, and the pressing-down mechanism above the supporting member presses down a wall of the housing opposite the opening to enable the open end of the housing to fit with the end cap, and thus the end cap closes off the opening of the housing. Therefore, during assembly of the end cap and the housing, the opening of the housing is downward, so that dust does not easily fall into the housing, thus ensuring the cleanliness of a battery interior and improving the quality of the battery cell. In addition, the supporting member supports the end cap, so that the structure of the assembly device for a battery cell can be simplified, and the equipment cost can be reduced.

The assembly device according to the embodiment of the present application can be used for, but not limited to, assembly of a battery cell, and can also be used for assembly of another product comprising a housing and an end cap, which is conductive to improving the quality of the assembled product, simplifying the structure of the assembly device and reducing the production cost.

For ease of description, according to embodiments of the present application, the assembly device is described by taking an example in which the assembly device is used to assemble a battery cell in the following embodiments.

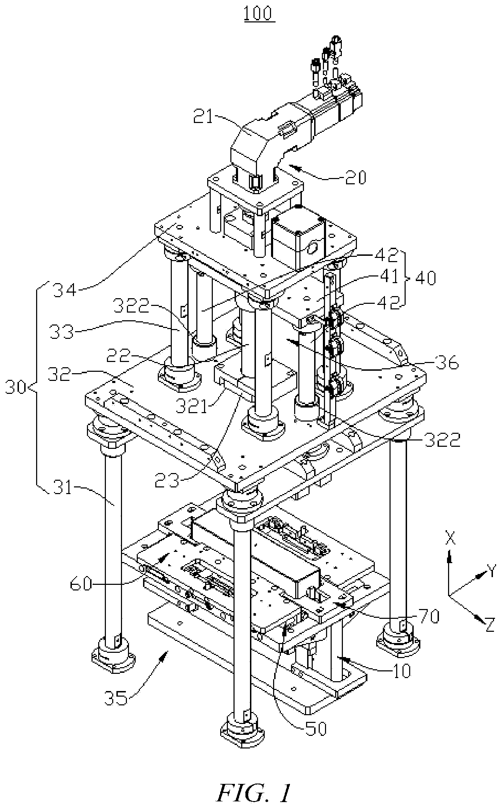

As shown in FIGS. 1, 2 and 3, an embodiment of the present application provides an assembly device 100 for a battery cell, wherein the battery cell 200 comprises an end cap 210 and a housing 220 with an opening 221, and the assembly device 100 for a battery cell comprises a supporting member 10 and a pressing-down mechanism 20. The supporting member 10 is configured to support the end cap 210. The pressing-down mechanism 20 is arranged above the supporting member 10, and the pressing-down mechanism 20 is configured to press down the housing 220 to enable the housing 220 to fit with the end cap 210, so that the end cap 210 closes off the opening 221.

In this embodiment, the supporting member 10 may be fixed relative to the ground. In some other embodiments, the supporting member 10 may also move up and down relative to the ground.

In some embodiments, the assembly device 100 for a battery cell further comprises a frame 30, and the pressing-down mechanism 20 is mounted on the frame 30. As shown in FIG. 1, the frame 30 comprises a plurality of first support rods 31, a first platform 32, a plurality of second support rods 33, and a second platform 34. The plurality of first support rods 31 are spaced apart and are supported below the first platform 32, to form a first placing space 35 below the first platform 32, and the supporting member 10 is located in the first placing space 35 below the first platform 32. The plurality of first support rods 31 are evenly spaced apart along a periphery of the supporting member 10 to improve stress uniformity of the first platform 32, thereby improving the stability of the first platform 32. The second platform 34 is located above the first platform 32, and the plurality of second support rods 33 are located above the first platform 32. The plurality of second support rods 33 are supported between the first platform 32 and the second platform 34 to form a second placing space 36 between the first platform 32 and the second platform 34. The pressing-down mechanism 20 is mounted on the second platform 34.

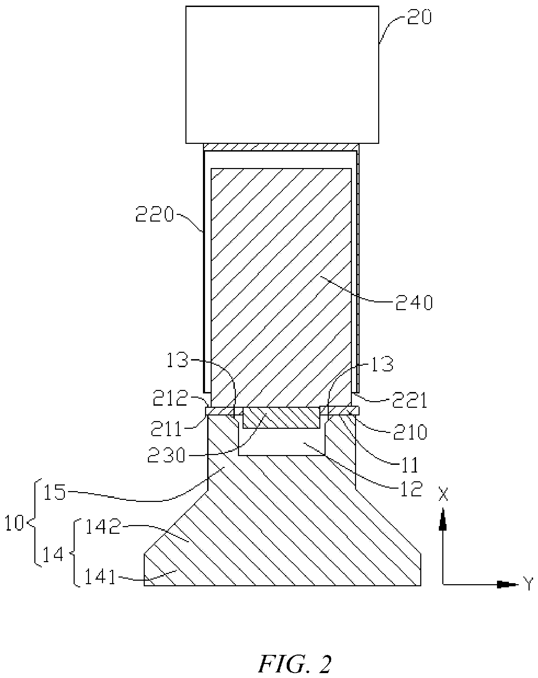

The pressing-down mechanism 20 has various structural forms. For example, as shown in FIG. 2, the pressing-down mechanism 20 comprises an electric motor 21, a screw rod 22, and a pressing-down block 23, and the electric motor 21 is mounted on the second platform 34. The screw rod 22 is connected to an output end of the electric motor 21 and passes through the second platform 34 and the first platform 32 in sequence, and the pressing-down block 23 is screwed to the screw rod 22. The first platform 32 is provided with a mounting hole 321 passing through the first platform 32, and the pressing-down block 23 is arranged in the mounting hole 321 in a penetrating manner. The shape of the mounting hole 321 can limit the pressing-down block 23 in a circumferential direction to prevent the pressing-down block 23 from circumferentially rotating with the screw rod 22 when the screw rod 22 rotates.

The assembly device 100 for a battery cell further comprises a guide assembly 40. The guide assembly 40 comprises a mounting plate 41 and a guide rod 42. The mounting plate 41 is located between the first platform 32 and the second platform 34, and the mounting plate 41 is mounted on the pressing-down block 23. One end of the guide rod 42 is connected to the mounting plate 41, and the other end of the guide rod 42 is inserted into a guide hole 322 in the first platform 32. One or a plurality of guide rods 42 may be provided. A plurality of means two or more. FIG. 1 shows a case in which two guide rods 42 are provided. The guide rod 42 guides the pressing-down block 23 to move up and down, so as to improve the stability of the movement of the pressing-down block 23. The electric motor 21 drives the screw rod 22 to move the pressing-down block 23 up and down, so that the pressing-down block 23 presses down the housing 220 above the end cap 210 supported on the supporting member 10.

In some other embodiments, the pressing-down mechanism 20 may also be in other structural forms, for example, the pressing-down mechanism 20 is a hydraulic device or a pneumatic device.

The supporting member 10 is fixedly arranged in a vertical direction X, that is, the supporting member 10 cannot move in the vertical direction X. When the end cap 210 is supported on the supporting member 10, in a thickness direction of the end cap 210, a first surface 211 of the end cap 210 is supported on a supporting face 11 of the supporting member 10 and a second surface 212 of the end cap 210 is arranged opposite an open end of the housing 220, the first surface 211 and the second surface 212 being arranged opposite each other.

The supporting member 10 is configured to support the end cap 210, so that the open end of the housing 220 covers over the end cap 210, and the pressing-down mechanism 20 above the supporting member 10 presses down a wall of the housing 220 opposite the opening 221 to enable the opening 221 of the housing 220 to fit with the end cap 210, and thus the end cap 210 closes off the opening 221 of the housing 220. Therefore, during assembly of the end cap 210 and the housing 220, the opening 221 of the housing 220 is downward, so that dust does not easily fall into the housing 220, thus ensuring the cleanliness of a battery interior and improving the quality of the battery cell 200. In addition, the supporting member 10 supports the end cap 210, so that the structure of the assembly device 100 for a battery cell can be simplified, and the equipment cost can be reduced.

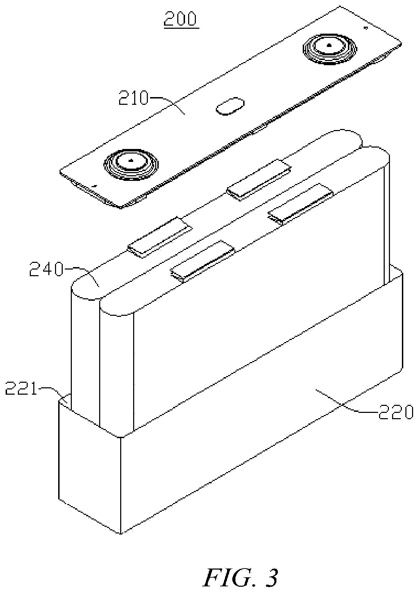

In some embodiments, as shown in FIG. 3, the battery further comprises an electrode terminal 230, the end cap 210 is provided with an electrode lead-out hole, and the electrode terminal 230 is arranged in the electrode lead-out hole in an insulated manner. The electrode terminal 230 is configured to be electrically connected to a tab of an electrode assembly 240, so as to output electric energy of the battery cell 200. The electrode terminal 230 extends out of the electrode lead-out hole and protrudes from a surface of the end cap 210 that faces away from the housing 220, that is, the electrode terminal 230 protrudes from the first surface 211 of the end cap 210. When the supporting member 10 supports the end cap 210, the electrode terminal 230 may abut against the supporting face 11 of the supporting member 10, and as a result, the first surface 211 of the end cap 210 cannot abut against the supporting face 11 of the supporting member 10.

Based on this, as shown in FIG. 2, in some embodiments, the supporting member 10 comprises: a supporting face 11 and a recessed portion 12, wherein the supporting face 11 is configured to support the end cap 210; and the recessed portion 12 is recessed from the supporting face 11 in a direction away from the pressing-down mechanism 20, and the recessed portion 12 is configured to avoid the electrode terminal 230 on the end cap 210.

The supporting face 11 is flat, and the supporting face 11 is attached to the first surface 211 of the end cap 210 to support the end cap 210. The electrode terminal 230 is inserted in the recessed portion 12. In the vertical direction X, the recessed portion 12 has a depth greater than or equal to a length of the electrode terminal 230 protruding from the first surface 211 of the end cap 210, and a side wall of the recessed portion 12 may or may not be in contact with a circumferential face of the electrode terminal 230, so that the electrode terminal 230 can be smoothly inserted into the recessed portion 12, thereby preventing a case in which the supporting member 10 cannot support the end cap 210 due to interference between the supporting member 10 and the electrode terminal 230.

When the end cap 210 is supported on the supporting member 10, in the vertical direction X, an outer contour of a projection of the end cap 210 on the supporting face 11 may completely coincide with an outer contour of the supporting face 11; or in the vertical direction X, the outer contour of the projection of the end cap 210 on the supporting face 11 is arranged around a periphery of the outer contour of the supporting face 11; or in the vertical direction X, the outer contour of the projection of the end cap 210 on the supporting face 11 is located in a region enclosed by the outer contour of the supporting face 11. FIG. 2 shows a case in which, in the vertical direction X, the outer contour of the projection of the end cap 210 on the supporting face 11 is arranged around the periphery of the outer contour of the supporting face 11.

The electrode terminal 230 may be cylindrical, prismatic, etc. The shape of the recessed portion 12 may match the shape of the electrode terminal 230. For example, the electrode terminal 230 is cylindrical, and the recessed portion 12 may also be circular. The recessed portion 12 has an axial dimension greater than or equal to that of a portion of the electrode terminal 230 protruding from the first surface 211 of the end cap 210, and the recessed portion 12 has a diameter greater than or equal to that of the electrode terminal 230. Certainly, the shape of the recessed portion 12 may not match the shape of the electrode terminal 230, provided that the portion of the electrode terminal 230 protruding from the first surface 211 of the end cap 210 can be inserted into the recessed portion 12.

As shown in FIG. 2, a first guide bevel 13 is formed on a portion of the side wall of the recessed portion 12 close to the supporting face 11 in the vertical direction X, so that an inversely splayed opening is formed at an upper end of the recessed portion 12, thereby facilitating the insertion of the electrode terminal 230 into the recessed portion 12 from top to bottom.

When the electrode terminal 230 is inserted into the recessed portion 12, the side wall of the recessed portion 12 can also limit the electrode terminal 230, so as to prevent the end cap 210 from moving relative to the supporting face 11 or reduce a moving range of the end cap 210 relative to the supporting face 11.

Therefore, the recessed portion 12 on the supporting face 11 can avoid the electrode terminal 230, so as to prevent the instability in supporting the end cap 210 caused by interference between the electrode terminal 230 and the supporting member 10. In addition, the electrode terminal 230 is in inserted fit with the recessed portion 12, so that the position of the end cap 210 can be secured, and the stability in supporting the end cap 210 by the supporting member 10 is further improved.

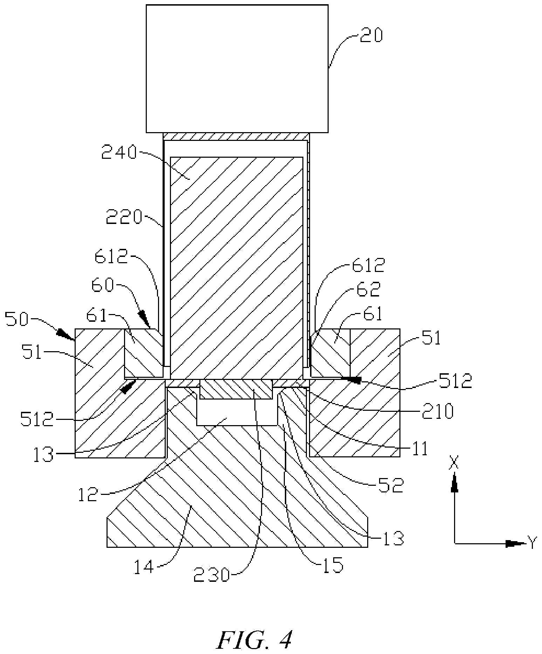

As shown in FIG. 4, in some embodiments, the assembly device 100 for a battery cell further comprises: a first limiting mechanism 50 configured to limit the end cap 210 in a first direction Y, the first direction Y being perpendicular to a pressing down direction of the pressing-down mechanism 20.

The first limiting mechanism 50 limits the end cap 210 in the first direction Y, and the end cap 210 will not move relative to the supporting member 10 in the first direction Y during the process of pressing down the housing 220 by the pressing-down mechanism 20, which is conducive to improving the stability of the end cap 210 on the supporting member 10 and the assembly precision of the battery cell 200.

The first limiting mechanism 50 has various structural forms. For example, in FIG. 4, in some embodiments, the first limiting mechanism 50 comprises two first limiting members 51, and a first limiting gap 52 for accommodating the end cap 210 is formed between the two first limiting members 51 in the first direction Y.

Each of the first limiting members 51 comprises a plurality of first limiting portions 511 spaced apart in a second direction Z, and the plurality of first limiting portions 511 limit the end cap 210 at different positions in the second direction Z.

When the two first limiting members 51 limit the end cap 210 in the first direction Y, the first limiting members 51 may abut against the end cap 210 in the first direction Y, so as to prevent the end cap 210 from moving in the first direction Y. The first limiting members 51 may not be in contact with the end cap 210 in the first direction Y, so that the two first limiting members 51 can define a maximum moving range of the end cap 210 in the first direction Y.

The size of the first limiting gap 52 defined between the two first limiting members 51 in the first direction Y may be constant. Certainly, it is also possible to provide a driving member to drive at least one of the two first limiting members 51 to move so as to adjust the size of the first limiting gap 52 in the first direction Y, so that end caps 210 of different sizes can be limited.

An upper end of the first limiting gap 52 is open, so that the electrode terminal 230 on the end cap 210 can be inserted into the first limiting gap 52 from the upper end of the first limiting gap 52. In the second direction Z, two ends of the first limiting gap 52 are open, so that the electrode terminal 230 can enter or exit the first limiting gap 52 in the second direction Z. The first direction Y, the second direction Z and the vertical direction X are perpendicular to each other.

When each of the first limiting members 51 abuts against a circumferential face of the end cap 210 in the first direction Y, the first limiting member 51 may abut against a side face of the supporting member 10, or a gap may be formed between the first limiting member and the side face of the supporting member 10. The circumferential face of the end cap 210 means a surface of the end cap 210 opposite the first limiting member 51 in the first direction Y when the end cap 210 is supported on the supporting member 10. The side face of the supporting member 10 means a surface of the supporting member 10 opposite the first limiting member 51 in the first direction Y.

In some other embodiments, the first limiting mechanism 50 may also comprise two first telescopic structures arranged opposite each other in the first direction Y, and the first telescopic structures are telescopic in the first direction Y to define first limiting gaps 52 of different sizes. Each of the first telescopic structures may be a cylinder, a hydraulic cylinder, etc.

The end cap 210 is accommodated in the first limiting gap 52 defined by the two first limiting members 51, and the end cap 210 will not move relative to the supporting member 10 in the first direction Y during the process of pressing down the housing 220 by the pressing-down mechanism 20, thereby improving the support stability of the supporting member 10 and the assembly precision of the battery cell 200.

In some embodiments, the supporting member 10 at least partially extends into the first limiting gap 52 to support the end cap 210.

As shown in FIG. 4, the supporting member 10 comprises a mounting portion 14 and a supporting portion 15. The supporting portion 15 is connected to an upper end of the mounting portion 14, and the mounting portion 14 is configured to mount and fix the supporting member 10, so that the supporting member 10 cannot move in the vertical direction X. The mounting portion 14 comprises a first connecting section 141 and a second connecting section 142. The first connecting section 141 is a cuboid, and the second connecting section 142 is a trapezoid. The second connecting section 142 is located above the first connecting section 141, and a large end of the second connecting section 142 is connected to the first connecting section 141. The supporting portion 15 is connected to a small end of the second connecting section 142. The supporting face 11 is located at an end of the supporting portion 15 that faces away from the second connecting section 142. The supporting face 11 and the recessed portion 12 are located on a side of the supporting portion 15 that faces away from the mounting portion 14.

In this embodiment, the supporting portion 15 extends upward into the first limiting gap 52, and the mounting portion 14 is located below the first limiting member 51 and outside the first limiting gap 52, so that a portion of the supporting member 10 extends into the first limiting gap 52. In some other embodiments, the entire supporting member 10 can extend into the first limiting gap 52, that is, the supporting portion 15 and the mounting portion 14 are both located in the first limiting gap 52. In some still other embodiments, the supporting member 10 is located below the first limiting member 51 in the vertical direction X, so that the entire supporting member 10 is located outside the first limiting gap 52.

The supporting member 10 at least partially extends into the first limiting gap 52, so that the end cap 210 can be more stably supported, and the first limiting member 51 has a relatively large size in the vertical direction X, which facilitates machining and manufacturing.

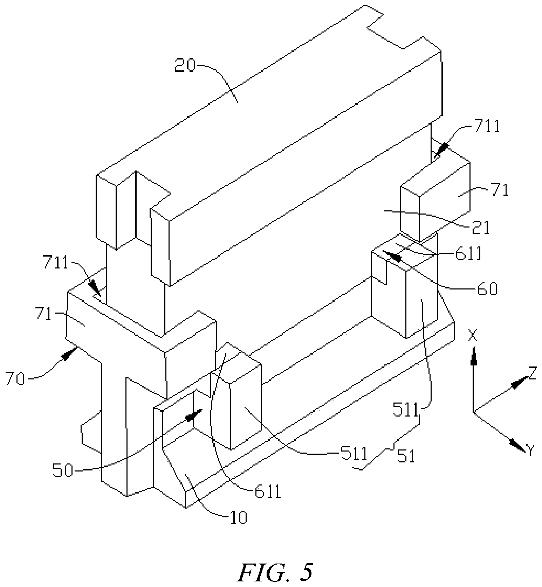

As shown in FIGS. 4 and 5, in some embodiments, the assembly device 100 for a battery cell further comprises: a second limiting mechanism 60 configured to limit the housing 220 in the first direction Y, wherein the second limiting mechanism 60 comprises two second limiting members 61, the two second limiting members 61 are respectively arranged on the two first limiting members 51, and a second limiting gap 62 for accommodating the housing 220 is formed between the two second limiting members 61 in the first direction Y.

Each of the second limiting members 61 comprises a plurality of second limiting portions 611 spaced apart in the second direction Z, the second limiting portions 611 are arranged in one-to-one correspondence with the first limiting portions 511, and each of the second limiting portions 611 is arranged on the corresponding first limiting portion 511. The plurality of second limiting portions 611 limit the housing 220 at different positions in the second direction Z. FIG. 5 shows a case in which two first limiting portions 511 and two second limiting portions 611 are provided.

In the first direction Y, the size of the first limiting gap 52 may be greater than, less than or equal to that of the second limiting gap 62. When the two second limiting members 61 limit the housing 220 in the first direction Y, the second limiting members 61 may abut against the housing 220 in the first direction Y, so as to prevent the housing 220 from moving in the first direction Y. The second limiting members 61 may not be in contact with the housing 220 in the first direction Y, so that the two second limiting members 61 can define a maximum moving range of the housing 220 in the first direction Y.

Each of the second limiting members 61 may be arranged at an upper end of the first limiting member 51, or on a side of the first limiting member 51 in the first direction Y. In an embodiment in which the first limiting member 51 can move, the second limiting member 61 may move synchronously with the first limiting member 51, thereby adjusting the size of the second limiting gap 62.

In some other embodiments, the second limiting mechanism 60 and the first limiting mechanism 50 may be mechanisms independent of each other. The second limiting mechanism 60 is configured to limit the housing 220 in the first direction Y, and the limiting function of the second limiting mechanism 60 is not affected by the first limiting mechanism 50. For example, the second limiting mechanism 60 may also comprise two second telescopic structures arranged opposite each other in the first direction Y, and the second telescopic structures are telescopic in the first direction Y to define second limiting gaps 62 of different sizes. Each of the second telescopic structures may be a cylinder, a hydraulic cylinder, etc.

The second limiting mechanism 60 limits the housing 220 in the first direction Y, and the housing 220 will not move relative to the end cap 210 in the first direction Y during the process of pressing down the housing 220 by the pressing-down mechanism 20, which is conducive to keeping a stable relative position relationship between the housing 220 and the end cap 210 and improving the assembly precision of the battery cell 200. The two second limiting members 61 are respectively arranged on the two first limiting members 51, so that the assembly device 100 for a battery cell has a more compact structure, and a space occupied by the assembly device 100 for a battery cell can be reduced.

In some embodiments, a first groove 512 is formed in a surface of each of the first limiting members 51 that faces the housing 220 in the first direction Y, and the second limiting members 61 are arranged in the first grooves 512.

In the first direction Y, each of the second limiting members 61 may extend out of the first groove 512, or may be entirely located in the first groove 512. In the first direction Y, a surface of the first limiting member 51 facing the end cap 210 and a surface of the second limiting member 61 facing the housing 220 may be flush with each other. FIG. 4 shows a case in which each of the second limiting members 61 is entirely located in the first groove 512 in the first direction Y.

Each of the second limiting members 61 is arranged in the first groove 512 in the surface of the first limiting member 51 that faces the end cap 210, so that the first limiting member 51 and the second limiting member 61 are more compact, and a space occupied by the first limiting member and the second limiting member is reduced.

Still referring to FIGS. 4 and 5, in some embodiments, each of the first grooves 512 passes through a surface of the first limiting member 51 in a direction in which the supporting member 10 faces the pressing-down mechanism 20.

As shown in FIGS. 4 and 5, in the vertical direction X, the first groove 512 passes through the upper end of the first limiting member 51, so that the first groove 512 has two groove openings respectively located at the upper end of the first limiting member 51 and in the surface of the first limiting member 51 facing the end cap 210, and thus the second limiting member 61 can be embedded in the first groove 512 from the groove opening at the upper end of the first groove 512 or from the groove opening of the first groove 512 in the surface of the first limiting member 51 facing the end cap 210. Certainly, in some other embodiments, the first groove 512 may have only a groove opening located in the surface of the first limiting member 51 facing the end cap 210.

A second guide bevel 612 is formed on a portion of the surface of the second limiting member 61 facing the housing 220 that is close to an upper end of the second limiting member 61, so that an inversely splayed opening is formed at an upper end of the second limiting gap 62, thereby facilitating the insertion of the housing 220 into the second limiting gap 62 from top to bottom.

In the vertical direction X, each of the second limiting members 61 may extend out of the first groove 512, or may be entirely located in the first groove 512. In the vertical direction X, the upper end of the first limiting member 51 and the upper end of the second limiting member 61 may be flush with each other. FIG. 4 shows a case in which the upper end of the second limiting member 61 and the upper end of the first limiting member 51 are flush with each other in the vertical direction X.

The first groove 512 passes through the surface of the supporting member 10 that faces the pressing-down mechanism 20, which facilitates the engagement of the second limiting member 61 into the first groove 512 from top to bottom.

In some embodiments, the second limiting members 61 are made of a nonmetallic material.

The second limiting members 61 may be made of a nonmetallic material such as rubber or plastic.

The second limiting members 61 are made of a nonmetallic material, which can reduce a risk of damage to the housing 220 caused by the second limiting members 61 when the second limiting members 61 come into contact with the housing 220.

As shown in FIG. 5, in some embodiments, the assembly device 100 for a battery cell further comprises: a third limiting mechanism 70 configured to limit the housing 220 in a second direction Z, the second direction Z being perpendicular to the pressing down direction of the pressing-down mechanism 20.

The pressing down direction of the pressing-down mechanism 20 is parallel to the vertical direction X.

In this embodiment, the position where the third limiting mechanism 70 limits the housing 220 is located above the first limiting member 51 and the second limiting member 61. Therefore, the second limiting mechanism 60 and the third limiting mechanism 70 limit the housing 220 at different positions respectively in the vertical direction X, thereby improving the stability of the housing 220 during the process of pressing down the housing 220. In this embodiment, the second direction Z, the first direction Y and the vertical direction X are perpendicular to each other, and the first direction Y and the second direction Z are different directions, so the third limiting mechanism 70 does not interfere with the first limiting mechanism 50 and the second limiting mechanism 60. In some other embodiments, the second direction Z and the first direction Y may also be the same direction, that is, the first direction Y is the same as the second direction Z.

The third limiting mechanism 70 limits the housing 220 in the second direction Z, and the housing 220 will not move relative to the end cap 210 in the second direction Z during the process of pressing down the housing 220 by the pressing-down mechanism 20, which is conducive to keeping a stable relative position relationship between the housing 220 and the end cap 210 and improving the assembly precision of the battery cell 200.

The third limiting mechanism 70 has various structural forms. For example, for the structure of the third limiting mechanism 70, reference may be made to the first limiting mechanism 50 and the second limiting mechanism 60. For another example, as shown in FIG. 5, in some embodiments, the third limiting mechanism 70 comprises two third limiting members 71 spaced apart in the second direction Z. Each of surfaces of the two third limiting members 71 that face the housing 220 is provided with a second groove 711, and the second groove 711 is configured for the housing 220 to be engaged therein.

As shown in FIG. 5, each of the second grooves 711 is provided with a first opening facing the housing 220 in the second direction Z, and the housing 220 may be engaged into the second groove 711 from the first opening of the second groove 711 in the second direction Z. The second groove 711 is located above the second limiting portion 611. In the vertical direction X, the second groove 711 passes through two ends of the third limiting member 71.

In some embodiments, the housing 220 may be engaged into the second groove 711 from top to bottom from a second opening located above. In some other embodiments, at least one of the two third limiting members 71 can move in the second direction Z, and the movement of the third limiting member(s) 71 in the second direction Z enables the housing 220 to be engaged into the second groove 711 from the first opening in the second direction Z. After two ends of the housing 220 in the second direction Z are respectively engaged into the second grooves 711 of the two third limiting members 71, the two third limiting members 71 jointly limit the housing 220 in the second direction Z and the first direction Y.

The two ends of the housing 220 in the second direction Z are respectively engaged into the second grooves 711 of the two third limiting members 71, so that a stable fitting relationship between the housing 220 and the third limiting members 71 can be kept, and the stability of the housing 220 is improved.

The embodiments of the present application provide the assembly device 100 for a battery cell, comprising the supporting member 10, the pressing-down mechanism 20, the first limiting mechanism 50, the second limiting mechanism 60, and the third limiting mechanism 70. The supporting member 10 comprises the supporting face 11 for supporting the end cap 210 and the recessed portion 12 provided on the supporting face 11 and used for the electrode terminal 230 to be inserted therein. The pressing-down mechanism 20 is arranged above the supporting member 10, and the pressing-down mechanism 20 is configured to press down the housing 220 to enable the housing 220 to fit with the end cap 210, so that the end cap 210 closes off the opening 221.

The first limiting mechanism 50 comprises two first limiting members 51 arranged opposite each other in the first direction Y, and the two first limiting members 51 define the first limiting gap 52 for accommodating the end cap 210. The surface of each of the first limiting members 51 that faces the end cap 210 is provided with the first groove 512. The second limiting mechanism 60 comprises two second limiting members 61, and the two second limiting members 61 are respectively accommodated in the first grooves 512 of the two first limiting members 51 and define the second limiting gap 62. The third limiting mechanism 70 comprises two third limiting members 71 arranged opposite each other in the second direction Z, and two ends of the housing 220 in the second direction Z can be engaged into the second grooves 711 of the third limiting members 71. The first limiting mechanism 50, the second limiting mechanism 60 and the third limiting mechanism 70 cooperate to limit the end cap 210 and the housing 220, so as to improve the stability and assembly precision during battery assembly, thereby improving the quality of the assembled battery cell 200.

Therefore, during assembly of the battery cell 200, the electrode terminal 230, the end cap 210 and the electrode assembly 240 are placed on the supporting member 10 after being assembled into a whole, so that the electrode terminal 230 is inserted into the recessed portion 12, the first surface 211 of the end cap 210 is attached to the supporting face 11, and the end cap 210 is limited in the first limiting gap 52 by the first limiting members 51 of the first limiting mechanism 50. Then the housing 220 covers outside the electrode assembly 240 from top to bottom, so that the housing 220 is located in the second limiting gap 62, and the second limiting members 61 of the second limiting mechanism 60 limit the housing 220 in the first direction Y. The ends of the housing 220 are engaged into the second grooves 711 of the third limiting members 71 to limit the housing 220 in the second direction Z.

During the process of and after covering outside the electrode assembly 240 with the housing 220, the opening 221 of the housing 220 is downward, so that dust does not easily fall into the housing 220, thus ensuring the cleanliness of a battery interior and improving the quality of the battery cell 200. In addition, the supporting member 10 supports the end cap 210, so that the structure of the assembly device 100 for a battery cell can be simplified, and the equipment cost can be reduced.

## Claims

1. An assembly system comprising a battery cell (200) and an assembly device (100) for the battery cell (200), wherein the battery cell (200) comprises an end cap (210) and a housing (220) with an opening (221), **characterized in that** the opening (221) of the housing (220) is downward and that the assembly device (100) comprises:
a supporting member (10) configured to support the end cap (210), wherein the supporting member (10) comprises: a supporting face (11) configured to support the end cap (210); and a recessed portion (12) which is recessed from the supporting face (11) in a direction away from the pressing-down mechanism (20), the recessed portion (12) being configured to avoid an electrode terminal (230) on the end cap (210); and
a pressing-down mechanism (20) arranged above the supporting member (10), the pressing-down mechanism (20) being configured to press down a wall of the housing (220) opposite the opening (221) to enable the housing (220) to fit with the end cap (210), so that the end cap (210) closes off the opening (221).

2. The assembly system according to claim 1, **characterized by** further comprising:
a first limiting mechanism (50) configured to limit the end cap (210) in a first direction (Y), the first direction (Y) being perpendicular to a pressing down direction of the pressing-down mechanism (20).

3. The assembly system according to claim 2, **characterized in that** the first limiting mechanism (50) comprises two first limiting members (51), and a first limiting gap (52) for accommodating the end cap (210) is formed between the two first limiting members (51) in the first direction (Y).

4. The assembly system according to claim 3, **characterized in that** the supporting member (10) at least partially extends into the first limiting gap (52) to support the end cap (210).

5. The assembly system according to claim 3, **characterized by** further comprising:
a second limiting mechanism (60) configured to limit the housing (220) in the first direction (Y), wherein the second limiting mechanism (60) comprises two second limiting members (61), the two second limiting members (61) are respectively arranged on the two first limiting members (51), and a second limiting gap (62) for accommodating the housing (220) is formed between the two second limiting members (61) in the first direction (Y).

6. The assembly system according to claim 5, **characterized in that** a first groove (512) is formed in a surface of each of the first limiting members (51) that faces the housing (220) in the first direction (Y), and the second limiting members (61) are arranged in the first grooves (512).

7. The assembly system according to claim 6, **characterized in that** each of the first grooves (512) passes through a surface of the first limiting member (51) in a direction in which the supporting member (10) faces the pressing-down mechanism (20).

8. The assembly system according to claim 5, **characterized in that** the second limiting members (61) are made of a nonmetallic material.

9. The assembly system according to claim 2, **characterized by** further comprising:
a second limiting mechanism (60) configured to limit the housing (220) in the first direction (Y).

10. The assembly system according to any one of claims 1 to 9, **characterized by** further comprising:
a third limiting mechanism (70) configured to limit the housing (220) in a second direction (Z), the second direction (Z) being perpendicular to the pressing down direction of the pressing-down mechanism (20).

11. The assembly system according to claim 10, **characterized in that** the third limiting mechanism (70) comprises two third limiting members (71) spaced apart in the second direction (Z); and
each of surfaces of the two third limiting members (71) that face the housing (220) is provided with a second groove (711), and the second groove (711) is configured for the housing (220) to be engaged therein.

## Patentansprüche

1. Montagesystem, umfassend eine Batteriezelle (200) und eine Montagevorrichtung (100) für die Batteriezelle (200), wobei die Batteriezelle (200) eine Endkappe (210) und ein Gehäuse (220) mit einer Öffnung (221) umfasst, **dadurch gekennzeichnet, dass** die Öffnung (221) des Gehäuses (220) nach unten gerichtet ist und dass die Montagevorrichtung (100) aufweist:
ein Stützelement (10), das derart konfiguriert ist, dass es die Endkappe (210) stützt, wobei das Stützelement (10) Aufweist: eine Stützfläche (11), die derart konfiguriert ist, dass sie die Endkappe (210) stützt; und einen vertieften Abschnitt (12), der von der Stützfläche (11) in einer Richtung weg von dem Niederdrückmechanismus (20) vertieft ist, wobei der vertiefte Abschnitt (12) derart konfiguriert ist, dass er einen Elektrodenanschluss (230) an der Endkappe (210) umgeht; und
einen Niederdrückmechanismus (20), der oberhalb des Stützelements (10) angeordnet ist, wobei der Niederdrückmechanismus (20) derart konfiguriert ist, dass er eine Wand des Gehäuses (220) gegenüber der Öffnung (221) niederdrückt, um zu ermöglichen, dass das Gehäuse (220) auf die Endkappe (210) eingepasst ist, so dass die Endkappe (210) die Öffnung (221) verschließt.

2. Montagesystem nach Anspruch 1, **dadurch gekennzeichnet, dass** es ferner Aufweist:
einen ersten Begrenzungsmechanismus (50), der derart konfiguriert ist, dass er die Endkappe (210) in einer ersten Richtung (Y) begrenzt, wobei die erste Richtung (Y) senkrecht zu einer Niederdrückrichtung des Niederdrückmechanismus (20) verläuft.

3. Montagesystem nach Anspruch 2, **dadurch gekennzeichnet, dass** der erste Begrenzungsmechanismus (50) zwei erste Begrenzungselemente (51) umfasst und zwischen den zwei ersten Begrenzungselementen (51) in der ersten Richtung (Y) ein erster Begrenzungsspalt (52) zum Aufnehmen der Endkappe (210) ausgebildet ist.

4. Montagesystem nach Anspruch 3, **dadurch gekennzeichnet, dass** sich das Stützelement (10) mindestens teilweise in den ersten Begrenzungsspalt (52) erstreckt, um die Endkappe (210) zu stützen.

5. Montagesystem nach Anspruch 3, **dadurch gekennzeichnet, dass** es ferner Aufweist:
einen zweiten Begrenzungsmechanismus (60), der derart konfiguriert ist, dass er das Gehäuse (220) in der ersten Richtung (Y) begrenzt, wobei der zweite Begrenzungsmechanismus (60) zwei zweite Begrenzungselemente (61) umfasst, die zwei zweiten Begrenzungselemente (61) jeweils an den zwei ersten Begrenzungselementen (51) angeordnet sind und zwischen den zwei zweiten Begrenzungselementen (61) in der ersten Richtung (Y) ein zweiter Begrenzungsspalt (62) zum Aufnehmen des Gehäuses (220) ausgebildet ist.

6. Montagesystem nach Anspruch 5, **dadurch gekennzeichnet, dass** eine erste Nut (512) in einer Fläche jedes der ersten Begrenzungselemente (51) ausgebildet ist, die dem Gehäuse (220) in der ersten Richtung (Y) zugewandt sind und die zweiten Begrenzungselemente (61) in den ersten Nuten (512) angeordnet sind.

7. Montagesystem nach Anspruch 6, **dadurch gekennzeichnet, dass** jede der ersten Nuten (512) durch eine Fläche des ersten Begrenzungselements (51) in einer Richtung passiert, in der das Stützelement (10) dem Niederdrückmechanismus (20) zugewandt ist.

8. Montagesystem nach Anspruch 5, **dadurch gekennzeichnet, dass** die zweiten Begrenzungselemente (61) aus einem nichtmetallischen Material gebildet sind.

9. Montagesystem nach Anspruch 2, **dadurch gekennzeichnet, dass** es ferner Aufweist:
einen zweiten Begrenzungsmechanismus (60), der derart konfiguriert ist, dass er das Gehäuse (220) in der ersten Richtung (Y) begrenzt.

10. Montagesystem nach einem der Ansprüche 1 bis 9, **dadurch gekennzeichnet, dass** es ferner aufweist:
einen dritten Begrenzungsmechanismus (70), der derart konfiguriert ist, dass er das Gehäuse (220) in einer zweiten Richtung (Z) begrenzt, wobei die zweite Richtung (Z) senkrecht zu der Niederdrückrichtung des Niederdrückmechanismus (20) verläuft.

11. Montagesystem nach Anspruch 10, **dadurch gekennzeichnet, dass** der dritte Begrenzungsmechanismus (70) zwei dritte Begrenzungselemente (71) umfasst, die in der zweiten Richtung (Z) beabstandet sind; und
jede der Flächen der zwei dritten Begrenzungselemente (71), die dem Gehäuse (220) zugewandt sind, mit einer zweiten Nut (711) bereitgestellt ist, und die zweite Nut (711) derart konfiguriert ist, dass das Gehäuse (220) darin eingreifen kann.

## Revendications

1. Système d'assemblage comprenant une cellule de batterie (200) et un dispositif d'assemblage (100) destiné à la cellule de batterie (200), la cellule de batterie (200) comprenant un capuchon d'extrémité (210) et une enveloppe (220) dotée d'une ouverture (221), **caractérisé en ce que** l'ouverture (221) de l'enveloppe (220) est orientée vers le bas et **en ce que** le dispositif d'assemblage (100) comprend :
un élément de support (10) conçu pour porter le capuchon d'extrémité (210), l'élément de support (10) comprenant : une face de support (11) conçue pour porter le capuchon d'extrémité (210) ; et une partie évidée (12), laquelle est évidée à partir de la face de support (11) dans une direction s'éloignant du mécanisme d'application de pression vers le bas (20), la partie évidée (12) étant conçue pour éviter une borne d'électrode (230) sur le capuchon d'extrémité (210) ; et
un mécanisme d'application de pression vers le bas (20) agencé au-dessus de l'élément de support (10), le mécanisme d'application de pression vers le bas (20) étant conçu pour exercer une pression vers le bas sur une paroi de l'enveloppe (220) opposée à l'ouverture (221), afin de permettre à l'enveloppe (220) d'être en adéquation avec le capuchon d'extrémité (210) de sorte que le capuchon d'extrémité (210) ferme l'ouverture (221).

2. Le système d'assemblage selon la revendication 1, **caractérisé en ce qu'**il comprend en outre :
un premier mécanisme de limitation (50) conçu pour limiter le capuchon d'extrémité (210) dans une première direction (Y), la première direction (Y) étant perpendiculaire à une direction de pression vers le bas du mécanisme d'application de pression vers le bas (20).

3. Le système d'assemblage selon la revendication 2, **caractérisé en ce que** le premier mécanisme de limitation (50) comprend deux premiers éléments de limitation (51), et un premier espacement de limitation (52), permettant de loger le capuchon d'extrémité (210), est formé entre les deux premiers éléments de limitation (51) dans la première direction (Y).

4. Le système d'assemblage selon la revendication 3, **caractérisé en ce que** l'élément de support (10) s'étend au moins partiellement dans le premier espacement de limitation (52), afin de porter le capuchon d'extrémité (210).

5. Le système d'assemblage selon la revendication 3, **caractérisé en ce qu'**il comprend en outre :
un deuxième mécanisme de limitation (60) conçu pour limiter l'enveloppe (220) dans la première direction (Y), le deuxième mécanisme de limitation (60) comprenant deux deuxièmes éléments de limitation (61), les deux deuxièmes éléments de limitation (61) étant agencés respectivement sur les deux premiers éléments de limitation (51), et un second espacement de limitation (62), permettant de loger l'enveloppe (220), est formé entre les deux deuxièmes éléments de limitation (61) dans la première direction (Y).

6. Le système d'assemblage selon la revendication 5, **caractérisé en ce qu'**une première rainure (512) est formée dans une surface de chacun des premiers éléments de limitation (51) orientée vers l'enveloppe (220) dans la première direction (Y), et les deuxièmes éléments de limitation (61) sont agencés dans les premières rainures (512).

7. Le système d'assemblage selon la revendication 6, **caractérisé en ce que** chacune des premières rainures (512) passe à travers une surface du premier élément de limitation (51) dans une direction dans laquelle l'élément de support (10) fait face au mécanisme d'application de pression vers le bas (20).

8. Le système d'assemblage selon la revendication 5, **caractérisé en ce que** les deuxièmes éléments de limitation (61) sont constitués d'un matériau non métallique.

9. Le système d'assemblage selon la revendication 2, **caractérisé en ce qu'**il comprend en outre :
un deuxième mécanisme de limitation (60) conçu pour limiter l'enveloppe (220) dans la première direction (Y).

10. Le système d'assemblage selon l'une quelconque des revendications 1 à 9, **caractérisé en ce qu'**il comprend en outre :
un troisième mécanisme de limitation (70) conçu pour limiter l'enveloppe (220) dans une seconde direction (Z), la seconde direction (Z) étant perpendiculaire à la direction de pression vers le bas du mécanisme d'application de pression vers le bas (20).

11. Le système d'assemblage selon la revendication 10, **caractérisé en ce que** le troisième mécanisme de limitation (70) comprend deux troisièmes éléments de limitation (71) espacés dans la seconde direction (Z) ; et
chacune des surfaces des deux troisièmes éléments de limitation (71), orientées vers l'enveloppe (220), est munie d'une seconde rainure (711), et la seconde rainure (711) est conçue pour permettre à l'enveloppe (220) d'être en prise dans ladite rainure.
